(19) Europäisches Patentamt / European Patent Office / Office européen des brevets

(11) **EP 4 484 917 B1**

(12) **EUROPEAN PATENT SPECIFICATION**

(45) Date of publication and mention
of the grant of the patent:
**01.07.2026 Bulletin 2026/27**

(21) Application number: **24205827.9**

(22) Date of filing: **24.07.2020**

(51) International Patent Classification (IPC):
**G01M 17/02** *(2006.01)*

(52) Cooperative Patent Classification (CPC):
**G01M 17/022; G01M 17/025**

(54) **METHOD OF TESTING A TYRE**

VERFAHREN ZUM TESTEN EINES REIFENS

PROCÉDÉ DE CONTRÔLE D'UN PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2019 IT 201900014049**

(43) Date of publication of application:
**01.01.2025 Bulletin 2025/01**

(62) Document number(s) of the earlier application(s) in accordance with Art. 76 EPC:
**20750373.1 / 4 010 678**

(73) Proprietor: **Pirelli Tyre S.p.A.**
**20126 Milano (IT)**

(72) Inventors:
• **VERGANI, Andrea Salvatore**
**20126 Milano (IT)**
• **SABATO, Diego**
**20126 Milano (IT)**
• **VANALI, Marcello**
**43124 Parma (IT)**
• **BERARDENGO, Marta**
**75100 Matera (IT)**

(74) Representative: **Tirloni, Bartolomeo et al**
**BTA Srl**
**2nd floor**
**Viale Papa Giovanni XXIII, 106**
**24121 Bergamo (IT)**

(56) References cited:
**US-A1- 2006 265 154**

## Description

Technical field of the invention

The present invention relates to a method and an apparatus of testing a tyre, for example a rolling test.

State of the art

Typically a vehicle tyre has a substantially toroidal structure around an axis of rotation of the tyre during operation, and it has an equatorial plane perpendicular to the axis of rotation, said equatorial plane being typically a plane of (substantial) geometric symmetry (e.g. disregarding any minor asymmetries, such as the tread pattern and/or sidewalls lettering and/or structure or profile asymmetries).

The terms "radial" and "axial" are used with reference respectively to a direction substantially perpendicular to and to a direction substantially parallel to the axis of rotation of the tyre.

The term "tangential" is used with reference to a direction substantially perpendicular to both the radial direction and the axial direction (e.g. generally oriented according to the rolling direction of the tyre).

In the context of the industrial production of the tyres, it is known subjecting the tyres in the prototypal phase or in production to tests or checks for verifying that they meet certain requirements (e.g. quality, reliability, safety, performance, durability, etc.).

Some of these tests are aimed to measure the time duration of the tyre in its state of integrity during the rolling under certain conditions, typically more severe than those expected under normal use conditions. The duration of the tyre in its state of integrity, i.e. without any defect arising, is representative of the performance achieved, both in absolute terms and relatively to a predefined threshold (for example of few hundreds of hours).

Such rolling tests, typically destructive or in any case not repeatable, can be performed on a sample tyre representative of a specific class of tyres (for example characterized by a specific model and/or size and/or production process and/or receipt of the compounds used), for example for the purposes of the homologation before the marketing of the relative class of tyres and/or during the production of the class of tyres for verifying the maintenance of the requirements, for example for making sure that the process does not undergo an unacceptable drift in terms of finished tyre.

For conducting a rolling test, the tyre is initially mounted on a rim and inflated. The rim is then fixed to a rotating (typically idle) hub and the tyre is rotated on a rolling surface, for example made by a motorized rolling wheel. The tyre is subjected to a load, i.e. a thrust force against the rolling surface.

An example of a rolling test is the Endurance FMVSS 109/135 test, which provides maintaining the rotation of the tyre at a constant angular speed for a given time period (e.g. tens of hours) under constant conditions of internal pressure and load applied to the tyre (typically the load is averagely greater than the load that the tyre will have to withstand under normal use conditions). Rotation speed, load and pressure of the tyre are determined according to the characteristics of the tyre, for example the size, the load index or speed index, etc.

At regular time intervals, for example every twelve hours, the tyre is stopped to allow the visual inspection. If the tyre shows a visible defect (symptom of a damaged tyre), the rolling test is stopped and the tyre is thoroughly examined to classify the failure, otherwise the test is resumed. The test is considered passed, in absence of defects, upon reaching a predetermined time duration threshold (e.g. 34 hours).

Typically, a monitoring system monitors in real time one or more of the following parameters: the load, the pressure, the temperature, the rotation speed and the rolling radius (obtainable for example from the ratio between the rotation speeds of the tyre and of the rolling wheel). In this way, it is possible to detect any rapid and/or relevant variations of the monitored parameters, which indicate conditions of imminent or occurred breakage of the tyre, with consequent interruption of the test.

US2006265154A1, WO0204906A1 and US6606569B1 disclose a respective method of testing a tyre.

Summary of the invention

In the context of the rolling tests performed on the tyres, the Applicant has found that the visual inspection, for example performed on the tyre at predetermined time intervals, and/or the aforesaid continuous monitoring of some parameters (pressure, temperature, rolling radius, etc.), may in certain conditions not prove to be a reliable methodology for detecting the exact moment of the onset of a damage to the tyre and/or for recognizing the exact type of damage initially arisen.

The real-time monitoring in fact only detects breakages (e.g. bursts or lacerations) or structural failures of the tyre, while it is totally inadequate to detect damage (e.g. formation of cracks or internal cracks) which do not affect, for example, the air tightness and/or the structural tightness of the tyre.

In this sense, the visual inspection is typically more sensitive than the aforesaid continuous monitoring.

However, first of all, the visual inspection detects a visible damage only at the time of the scheduled inspection, and therefore with a potential delay with respect to the time of the onset of the damage, a delay that can go up to a maximum equal to the time interval between two inspections.

In addition, it can happen that a damage of the tyre begins to arise inside the tyre itself without manifesting any visible defect and, therefore, without being able to be identified by the visual inspection.

In this case, the Applicant has observed that two different situations may occur.

In a first situation, the damage, which arise inside the tyre and therefore not readily detectable, as the rolling test proceeds, develops up to generate a consequent externally visible, and therefore detectable, defect. In this situation, the rolling test, as normally conducted (i.e. with scheduled visual inspections at predetermined time intervals), could lead to an overestimation of the duration of the tyre corresponding to the time required for the internal damage to generate a corresponding externally visible defect (possibly added to the time elapsed before the latter is detected in the scheduled visual inspection).

In addition, in this situation, the damage visible during the inspection may not correspond in one way to the damage initially generated inside the tyre, with consequent inaccuracies in the classification of the damage that first was generated during the test.

In a second situation, the damage, which arise inside the tyre, may not generate any externally visible defects up to the maximum time of the test, and therefore not being detected in any visual inspection. In this situation the tyre, although in presence of an internal damage, can however be considered as not damaged and therefore pass the test ('false negative').

In addition, the visual inspection according to the Applicant is onerous in terms of manpower employed, lengthening of the test times (for the machine downtime), etc., with consequent impact on the costs of the test.

The Applicant has faced the problem, in the contest of the rolling test of a tyre, of determining the onset instant of a possible damage.

The Applicant has faced the problem, in the aforesaid contest, of identifying the presence of hidden defects for limiting the cases of false negative tyres.

The Applicant has faced the problem, in the aforesaid contest, of accurately recognizing the type of damage that first arises during the test.

According to the Applicant, one or more of the aforesaid problems are solved by the analysis of a frequency spectrum of a signal representative of a linear acceleration undergone by the tyre.

The invention relates to a method of testing a tyre as defined in claim 1 and to an apparatus for testing a tyre as defined in claim 13.

The Applicant has discovered that the spectrum of the signal of the linear acceleration undergone by the rolling tyre depends on the physical state of the tyre. For example, in the event of onset of one or more defects, the accelerometric stresses undergone by the tyre vary, and this variation is particularly evident and/or significant in the frequency domain, rather than in the time domain. According to the Applicant, this is due to the cyclic nature of the rolling.

The Applicant has therefore found that the time trend of at least one index calculated on the basis of at least one frequency spectrum of an accelerometric signal allows, for example, determining, at the end of the test or in real time, the onset instant of a damage (both visible and not visible). In fact, the Applicant has verified that, at least for some types of damage and/or under some test conditions and/or for some types of tyres, the time trend of the index shows a characteristic behaviour at the onset instant of the damage, due to an underlying variation of the frequency spectrum of the accelerometric signal. In this way, the moment when the damage arise is identified with greater accuracy and consequently a more accurate information is provided on the actual duration of the tyre.

The Applicant has found that the time trend of at least one index calculated as a function of at least one frequency spectrum allows, for example, identifying, at the end of the test or in real time, the onset of damages not visible during a visual inspection of the tyre, for example internal damage that has not spread to the outer surface of the tyre. In fact, it is possible, from the time trend of the index, to evaluate whether there have been significant changes in the spectrum of the accelerometric signal, symptom of the onset of a defect. In this way, the method is made more reliable, for example by limiting the cases of internally damaged tyres that pass the test since they do not have visible defects.

Furthermore, the Applicant has found that the evaluation of the state of damage of the tyre on the basis of the time trend of at least one index calculated as a function of at least one frequency spectrum makes it possible, in some cases, to classify the type of damage arisen in the tyre through the time trend itself. In fact, the frequency spectrum on which the index is calculated may depend, for example, on the structural element of the tyre subject to the damage and therefore a class of damage may correspond to a characteristic time trend of the index.

The present invention in one or more of the aforesaid aspects can have one or more of the following preferred features.

Preferably said processing unit is programmed and configured for performing one or more of the following operations provided in the method of the present invention.

Preferably said accelerometric signal comprises one or more of, more preferably all, the following distinct accelerometric sub-signals: a first accelerometric sub-signal representative of a radial component of said linear acceleration, a second accelerometric sub-signal representative of an axial component of said linear acceleration and a third accelerometric sub-signal representative of a tangential component of said linear acceleration.

Preferably said acceleration sensor is configured for separately detecting one or more of, more preferably all, an axial component, a radial component and a tangential component of said linear acceleration.

Preferably calculating said at least one frequency spectrum of said accelerometric signal comprises separately calculating a respective frequency spectrum for each of said accelerometric sub-signals.

Preferably calculating said at least one index as a function of said at least one frequency spectrum comprises separately calculating a respective index as a function of each respective frequency spectrum

In this way, information on the stresses undergone by the tyre along at least one of, more preferably all, the three space directions chosen rationally with respect to the rotation are acquired and elaborated.

In the following, any reference to the accelerometric signal, to the frequency spectrum and to the index is intended to refer to both a generic accelerometric signal, and to the corresponding frequency spectrum and index, and to one or more of the accelerometric sub-signal, and the corresponding respective frequency spectra and respective indexes.

Preferably evaluating the state of integrity of said tyre on the basis of said time trend of said at least one index comprises evaluating the state of integrity of said tyre on the basis of a time trend of one or more of said respective indexes, for example separately or in combination to each other. In this way, it is possible to evaluate the state of integrity of the tyre as a function of the time trend of the respective index for each of the space directions, obtaining characteristic information about the state of integrity of the tyre.

Preferably it is provided establishing that said tyre is damaged provided that said time trend of the at least one index (preferably of one or more of said respective indexes) verifies a (preferably respective) damage condition.

Preferably said (preferably respective) damage condition is verified when a value of said at least one index (preferably of one respective index) becomes greater than or equal to a (preferably respective) threshold value for said (preferably respective) index, more preferably uninterruptedly for a fixed time interval (e.g. greater than or equal to thirty minutes, or greater than or equal to sixty minutes).

The Applicant has in fact verified that the value of the index tends to increase in time at the generation and the development of a damage.

Preferably said evaluating said state of integrity of said tyre on the basis of the time trend of the at least one index (preferably of one or more of said respective indexes) is performed in real time (i.e. during the rotation of the tyre).

In this way it is possible to monitor in real time the state of integrity of the tyre without necessarily have to stop the test. For example, it is possible to detect the presence of a possible damage in the same moment of (or near to) the onset of the damage itself, with the possibility of intervening in the test.

Preferably it is provided interrupting said rotation of the tyre when said time trend of the at least one index (preferably of one or more of said respective indexes) verifies a (preferably respective) damage condition. In this way it is possible to stop the test in real time (regardless of any scheduled visual inspections) and possibly undergo the tyre to a visual inspection for a thoroughly evaluation. The test could be stopped (with consequent time savings with respect to the scheduled inspections) or resumed.

In one embodiment, it is provided interrupting the rotation at regular intervals (preferably at intervals greater than or equal to fifteen or twenty hours) and performing a scheduled visual inspection of the tyre for evaluating the state of integrity of the tyre. In this way, the scheduled visual inspections (regardless of said index/es) sum up and integrate the real-time monitoring of the state of integrity through the time trend of said index/es, offering a double check. For example, it is possible to detect specific damages (for example superficial aesthetic damages) that may in some situations not be detectable by the checking on the time trend of the index (or of the respective indexes). The continuous monitoring based on the index according to the present invention can also allow lengthening the intervals between two consecutive scheduled inspections with respect to the time intervals typically used (e.g. twelve hours).

In one embodiment there are no interruptions of the rotation of the tyre for scheduled visual inspections at regular intervals (with exception of a possible visual inspection at the end of the test), and it is provided interrupting said rotation of the tyre only when said time trend of the at least one index (preferably of one or more of said respective indexes) verifies a (preferably respective) damage condition. In this way, the downtime required to perform the scheduled visual inspections is saved and/or the costs of the manpower used to perform the test are significantly reduced since it is possible to perform only one visual inspection at the end of the rolling test for confirming whether the damages detected (or not detected) by the monitoring of the time trend of the index (and/or of the time trend of one or more respective indexes) are actually present (or respectively absent) onto the tyre.

Preferably it is provided generating an alarm signal as a result of said establishing that said tyre is damaged. In this way it is possible to report, e.g. during the real-time monitoring, a possible damage upon occurrence of which it is necessary to intervene with a visual inspection by the operator for evaluating the condition of the tyre and/or concluding the test.

Typically said rotation is characterized by a rotation speed (i.e. number of turns per time unit) which defines a fundamental frequency.

Typically said rotation is characterized by a rotation period (i.e. the time required by the tyre to perform a turn).

Preferably said at least one frequency spectrum, more preferably each of said respective frequency spectra, comprises a fundamental harmonic having frequency equal to said fundamental frequency.

Preferably it is provided acquiring a speed signal representative of said rotation speed of said tyre.

Preferably the apparatus comprises a speed sensor configured for detecting a rotation speed of said tyre and generating a speed signal representative of said rotation speed. Preferably said speed sensor is applied in part on said stator and in part on said rotor. Preferably said processing unit is in communication with said speed sensor for acquiring said speed signal.

**In** this way it is possible to carry out the spectral analysis taking into account the acquired fundamental frequency and/or to perform a synchronous sampling with the rotation as explained below.

Preferably said rotation speed is constant (substantially, for example with a maximum variation of 0.5 ÷ 1 km/h). **In** this way, the fundamental harmonic and its superior harmonics do not move in frequency during the performing of the test, and the calculation of the index can be done as a function of a reference spectrum acquired on whole tyre.

Preferably said speed signal and/or said accelerometric signal (preferably each of said accelerometric sub-signals) is/are acquired on a time series of acquisition intervals, wherein preferably each of said acquisition intervals has a duration, preferably continuous, greater than or equal to 1 minute and/or less than or equal to 5 minutes. Preferably said acquisition intervals have a same duration. Typically, each acquisition interval comprises a plurality (e.g. hundreds) of rotation periods. Preferably a time interval between a respective initial instant of two subsequent acquisition intervals is constant, more preferably it is greater than or equal to 5 minutes and/or less than or equal to 15 minutes

Preferably it is provided determining said time trend of the at least one index (preferably of each respective index), performing said calculating at least one frequency spectrum (preferably calculating each respective frequency spectrum), and/or said calculating at least one index (preferably each respective index), (preferably separately) for each of said acquisition intervals. **In** this way it is possible to efficiently obtain the time trend of the index.

Preferably said speed signal and/or said accelerometric signal (preferably each of said accelerometric sub-signals) is/are acquired with an acquisition frequency greater than or equal to 4000 **Hz** and/or less than or equal to 7000 **Hz** (for acquiring signals with sufficient quality).

Preferably calculating said at least one frequency spectrum (preferably each respective frequency spectrum) comprises (preliminarily) calculating a variance (RMS) of said accelerometric signal (preferably each of said accelerometric sub-signals) and accepting said accelerometric signal (preferably each of said accelerometric sub-signals) as a function of said variance. **In** this way, it is possible to evaluate whether the values of the acquired accelerometric signal (and/or of the accelerometric sub-signals) are acceptable and not influenced by factors extrinsic to the damage phenomenon and/or to evaluate the reliability and/or the consistency of the acquired accelerometric signal (and/or of the accelerometric sub-signals).

Preferably calculating said at least one frequency spectrum (preferably each respective frequency spectrum) comprises filtering (preferably after said calculating the variance) said accelerometric signal (preferably each of said accelerometric sub-signals) with a low-pass filter, more preferably a fourth order Butterworth filter. **In** this way, it is possible to eliminate the aliasing phenomenon, i.e. an under sampling of the considered accelerometric signal.

Preferably calculating said at least one frequency spectrum (preferably each respective frequency spectrum) comprises (preferably after said filtering), for each acquisition interval, interpolating said accelerometric signal (preferably each of said accelerometric sub-signals), more preferably with a spline, and, for each period of said rotation, sampling said interpolated accelerometric signal (preferably each of said accelerometric sub-signals) in a given number of points (preferably greater than or equal to one-hundred, and/or less than or equal to five-hundred). Preferably said sampling is performed in synchronous way with said rotation (i.e. for each rotation period the sampling points fall at the same respective angular position of the tyre).

**In** this way, it is possible to enable that a first and a last point of said given number of points always fall exactly at a starting instant and an ending instant of the rotation period (obtained for example from the speed signal), respectively.

Preferably said calculating said at least one frequency spectrum (preferably each respective frequency spectrum) comprises, more preferably subsequently to said sampling, calculating a Fourier transform, more preferably a Fast Fourier transform (FFT), on said accelerometric signal (preferably on each of said accelerometric sub-signals). **In** this way it is possible to rapidly and efficiently obtain the frequency spectrum of the accelerometric signal

Preferably said Fourier transform is calculated on a plurality (e.g. tens, preferably in predetermined number) of portions of said accelerometric signal (preferably of each of said accelerometric sub-signals), each portion corresponding to an integer (preferably greater than or equal to twenty and/or less than or equal to hundred) of consecutive rotation periods.

Preferably said calculating said at least one frequency spectrum (preferably each respective frequency spectrum) comprises averaging in terms of complex numbers said Fourier transforms calculated on said plurality of portions of accelerometric signal (preferably of each of said accelerometric sub-signals).

**In** this way it is possible to eliminate the noise from the accelerometric signal (and/or from the sub-signal of the accelerometric signal) acquired in synchronous way. Moreover, the average in terms of complex numbers allows limiting the weight of the harmonic phase difference (associated to the imaginary part of the complex numbers), which provides indications about the position of a defect, and keeping in consideration, for the calculation of the index, only the harmonic amplitude (associated to the real part of the complex numbers) which provides indications about the presence (and/or the weight) of a new defect.

Preferably calculating each respective frequency spectrum comprises determining a set of M harmonics, said M harmonics being integer multiples of a fundamental harmonic, more preferably consecutive starting from, and including, said fundamental harmonic. M is an integer number greater than or equal to twenty and/or less than or equal to fifty. In this way only the harmonics directly bound to the global dynamic of the tyre are considered, eliminating the harmonics bound to phenomena extrinsic to the damage phenomenon.

Preferably it is provided determining said M amplitudes of said M harmonics in an averaged frequency spectrum obtained through said averaging in terms of complex numbers said Fourier transforms calculated on said plurality of portions of accelerometric signal. Exemplarily said M amplitudes are determined by integrating amplitudes of harmonics which fall into a neighbourhood of a respective nominal frequency of the respective harmonic integer multiple of the fundamental harmonic. Preferably calculating each respective index comprises calculating a respective reference spectrum of each of said accelerometric sub-signals at a reference condition. Preferably said reference condition corresponds to a state of integrity of said tyre. Preferably said reference condition is temporally predetermined. Preferably said reference condition corresponds to a reference interval which preferably falls after a fifth hour and/or before a fifteenth hour from the beginning of the rotation of said tyre in thrust on said rolling surface.

In this way it is obtained the spectrum of the signal (and/or of each sub-signal) relative to the condition of not damaged tyre. In particular in the period between the fifth and the fifteenth hour from the beginning of the test it is considered that the tyre has reached a stability condition while maintaining the initial integrity, or more in general the initial state.

Preferably calculating said (preferably respective) reference spectrum comprises averaging a series of said (preferably respective) frequency spectra separately calculated for each acquisition interval of a series (preferably in number greater than or equal to two, and/or less than or equal to ten) of consecutive acquisition intervals in said reference condition (e.g. in said reference interval). In this way it is possible to obtain a (respective) reference spectrum for the accelerometric (sub-)signal which is not influenced by noise or another extrinsic factor and which is stable.

Preferably calculating each respective index comprises comparing, more preferably for each of said acquisition intervals, each respective frequency spectrum and said respective reference spectrum.

P is preferably greater than or equal to eight and/or less than or equal to twenty.

According to the invention only the first P harmonics having greater amplitude between the first M harmonics integer multiple of the fundamental harmonic are considered which are the most significant for the calculation of the index according to the Applicant.

Preferably said comparing comprises, for each acquisition interval:

- selecting, in said at least one frequency spectrum (preferably in each of said respective frequency spectra) of said each acquisition interval, a number P' of possible further harmonics of said at least one frequency spectrum corresponding to the harmonics belonging to the respective sub-sets of P harmonics in the frequency spectra (preferably in the respective frequency spectra) of the acquisition intervals prior to said each acquisition interval and not belonging to said sub-set of P harmonics in said at least one frequency spectrum (preferably in said each of said respective frequency spectra), wherein P' is preferably greater than or equal to 0 and/or less than or equal to M-P;
- comparing P' amplitudes of said P' possible further harmonics with respective amplitudes of corresponding harmonics in said (preferably respective) reference spectrum.

Preferably said comparing is performed applying, more preferably for each acquisition interval, the formula:

$$ IDP = \frac{1}{N} \sum_{i=1}^{N} \left( \frac{A_i}{A_{i_{rif}}} - 1 \right)^2 , $$

wherein **IDP** is said at least one index, or preferably said respective index;
N is a number greater than or equal to said number P of harmonics of said sub-set and less than or equal to said number M of harmonics of said set (preferably N is equal to the sum of said number P of harmonics belonging to said sub-set and to said number P' of said possible further harmonics);
$A_i$ is the amplitude of an i-th harmonic of said P harmonics of said sub-set of harmonics (and preferably also of said P' possible further harmonics);
$A_{i_{rif}}$ is the amplitude of an i-th harmonic of said (preferably respective) reference spectrum corresponding to said i-th harmonic.

In this way, it is possible to compare the amplitude of the i-th harmonic of the spectrum of the accelerometric signal with the corresponding amplitude of the i-th harmonic of the reference spectrum for each of said accelerometric sub-signal. It is thus possible to evaluate how much the spectrum of the accelerometric signal has varied with respect to the reference spectrum of the accelerometric signal representative of the not damaged condition of the tyre in each of the space directions wherein the accelerometric signal is acquired.

Preferably it is provided obtaining said time trend of said at least one index (preferably said time trend of each respective index) by:

- grouping said acquisition intervals in a time series of groups of acquisition intervals consecutive to each other (preferably each group comprising a given number, more preferably greater than or equal to two and/or less than or equal to ten, of acquisition intervals),
- performing for each group an average of the indexes (preferably of said respective indexes separately to each other) separately calculated for each acquisition interval of the group.

**In** this way the noise on the value of the index is reduced.

Preferably it is provided:

- supplying a rotor rotatably fixed to a stator for being able to rotate around said axis of rotation;
- mounting said rim on an attachment portion of said rotor;

wherein said accelerometric signal is acquired on said stator.

Preferably said acceleration sensor is mounted on said stator, more preferably at an end of the stator proximal to said attachment portion of the rotor.

**In** this way the detection of the acceleration and/or the frequency elaboration of the accelerometric signal is simple and/or reliable.

Preferably it is provided supplying a rolling wheel having a respective axis of rotation parallel to said axis of rotation, wherein said rolling surface belongs to said rolling wheel.

Typically said axis of rotation is static (as typically also said respective axis of rotation of the rolling wheel).

Preferably said apparatus comprises a thrust device for imparting on said rotor a thrust force directed towards said rolling wheel.

Preferably said force is constant. Preferably said force is chosen as a function of a load index of said tyre, for example said force is greater than or equal to 400 kg.

Optionally said apparatus comprises a pressure sensor for detecting a pressure of said tyre and generating a pressure signal representative of said pressure. Preferably said pressure sensor is mounted onto said rim. Preferably said processing unit in communication with said pressure sensor for acquiring said pressure signal.

Preferably said pressure can be kept constant by an adjustment system.

Brief description of the drawings

figure 1 shows a partial and schematic view of an apparatus of testing a tyre according to an embodiment of the present invention, with some parts in transparency;
figure 2 shows a flow chart of a method of testing a tyre according to an embodiment of the present invention;
figures 3, 4 and 5 show an example of a time trend of the indexes calculated according to an embodiment of the method of the present invention, respectively for three different damages of a tyre.

Detailed description of some embodiments of the invention

The features and advantages of the present invention will be further clarified by the following detailed description of some embodiments, presented by way of nonlimiting example of the present invention, with reference to the attached figures.

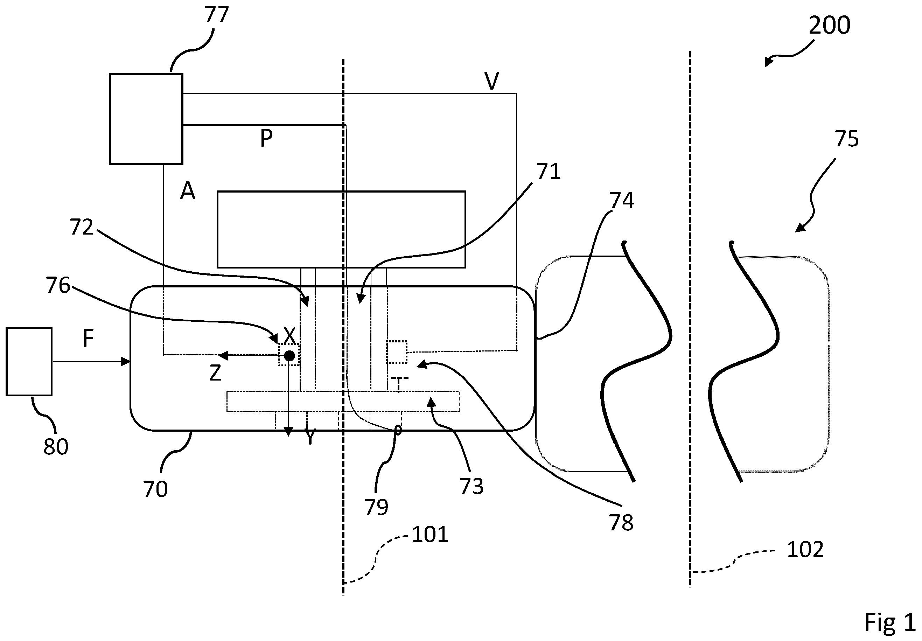

Figure 1 shows an example of an apparatus 200 of testing a tyre 70 according to the invention. Figure 1 can exemplarily show a top view.

The tyre 70 is mounted on a rim (not shown) and inflated to a, typically predetermined, pressure to obtain a vehicle wheel.

In figure 1 some parts seen in transparency through the wheel are shown in dashed line.

The apparatus 200 comprises a rotor 71 rotatably fixed to a stator 72 for being able to rotate around an axis of rotation 101. The rotor 71 comprises an attachment portion 73 configured for mounting the rim.

The apparatus 200 comprises a rolling wheel 75 having a respective axis of rotation 102 parallel to the axis of rotation 101 of the rotor 71. Typically, the axes of rotation 101 and 102 are static.

The apparatus 200 comprises an acceleration sensor 76. Exemplarily the acceleration sensor 76 is triaxial and it is configured for separately detecting a tangential component, an axial component and a radial component of the linear acceleration, in figure 1 respectively directed along the X, Y and Z axes.

Exemplarily the acceleration sensor 76 is mounted on the stator 72 (for example onto the outer surface of the stator 72), for example at an end of the stator 72 proximal to the attachment portion 73 of the rotor 71.

In alternative, not shown, embodiments the acceleration sensor can be mounted directly onto the rotor 71, or onto the rim, or again directly onto the tyre 70.

The apparatus 200 comprises a processing unit 77 in communication with the acceleration sensor 76, for example by the communication line A (wireless or not), for receiving the accelerometric signal generated by the accelerometric sensor 76.

Exemplarily the processing unit 77 is programmed and configured for performing the operations described below.

Exemplarily the apparatus 200 comprises a thrust device 80 for imparting to the rotor 71 a thrust force F directed towards the rolling wheel 75. The thrust device can for example comprise one or more cylinders which, in use, act on the stator 72 which in turn transfers the thrust force to the rotor 71 and from this to the tyre 70, which is therefore kept in thrust against the rolling wheel 75.

Exemplarily the apparatus 200 comprises a pressure sensor 79 configured for detecting a pressure of the tyre 70 and generating a pressure signal representative of the pressure. Exemplarily the pressure sensor 79 is in communication with the processing unit 77, for example by the communication line P (wireless or not), and it is applied on the filling valve of the tyre 70, the valve being mounted on the rim.

Exemplarily the apparatus 200 comprises a speed sensor 78 configured for detecting a rotation speed of the tyre 70 and generating a speed signal representative of the rotation speed. Exemplarily the speed sensor is applied in part onto the rotor 71 and in part onto the stator 72. Exemplarily the speed sensor 78 is in communication with the processing unit, for example by the communication line V (wireless or not).

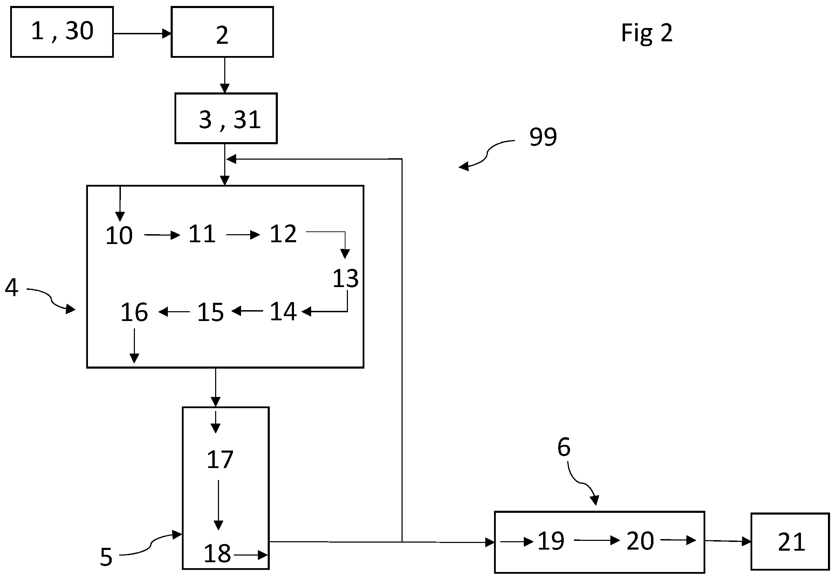

Figure 2 shows a flow diagram of the operations of an example of a method 99 of testing a tyre 70 according to the present invention, which can be implemented with the apparatus 200 described above.

The method 99 comprises mounting 1 the tyre 70 onto a rim and inflating 30 the tyre 70 to a pressure. Exemplarily the pressure of the tyre 70 is equal to the operating pressure of the specific tyre, for example about 200 kPa, and it is kept constant during the test.

The method 99 comprises rotating the tyre 70 around an axis of rotation 101, with the tyre 70 in thrust with a force F on the rolling surface 74 of the rolling wheel 75. Exemplarily the force F exerted on the tyre is kept constant, for example equal to about 1000 kg.

Exemplarily the rotation is characterized by a rotation speed of 10 round/s which defines a fundamental frequency equal to 10 Hz. Exemplarily the rotation speed is kept constant, for example with a maximum variation of 0.5 - 1 km/h.

In one possible embodiment, the rotation speed varies during the test, for example starting from 8 round/s up to 14 round/s, with increments (for example of 1 round/s) at regular intervals (for example every 200 minutes). In this embodiment at each interval corresponds a different rotation speed which is kept constant during the interval and to which corresponds a different fundamental frequency (e.g. which varies from 8 Hz to 14 Hz). In this case the method described below can be exemplarily implemented separately for each interval (e.g. a respective reference spectrum for each interval).

Exemplarily the rotation is characterized by a rotation period of about 0.1 seconds.

The method 99 comprises acquiring an accelerometric signal 3 representative of a linear acceleration undergone by the tyre 70 during rotation. Exemplarily the accelerometric signal comprises all the following distinct accelerometric sub-signals: a first accelerometric sub-signal representative of a radial component of the linear acceleration, a second accelerometric sub-signal representative of an axial component of the linear acceleration and a third sub- accelerometric signal representative of a tangential component of the linear acceleration.

In alternative embodiments, only one and/or two components of the linear acceleration undergone by the tyre 70 can be detected, for example in case you want to analyse a specific damage of the tyre 70 which is more detectable on a component of the acceleration.

Exemplarily it is provided performing the following operations separately on each acquired sub-signal. Therefore, in the following, each reference to the index (IDP) refers to each respective index ($IDP_X$, $IDP_Y$, $IDP_Z$) and each reference to a spectrum (e.g. frequency spectrum or reference spectrum) refers to the respective spectrum.

Exemplarily the method 99 comprises acquiring a speed signal 31 representative of the rotation speed of the tyre 70 (for example a signal of one pulse per turn).

Exemplarily the speed signal and each of the accelerometric sub-signals are acquired on a time series of acquisition intervals wherein, exemplarily, each of the acquisition intervals has the same continuous duration of three minutes. Exemplarily each acquisition interval comprises about 1800 rotation periods. Exemplarily a time interval between the initial instants of two subsequent acquisition intervals is constant and equal to ten minutes.

In other words, exemplarily every ten minutes a data record lasting three minutes each is acquired for the speed signal and each of the accelerometric sub-signals. In the present description and claims, an operation (e.g. calculating the spectrum or calculating the index) performed for an acquisition interval is intended to be performed on the respective data record acquired in that acquisition interval.

Exemplarily the speed signal and each of the accelerometric sub-signals are acquired with an acquisition frequency of about 5000 Hz.

Exemplarily it is provided performing the following operations on the signal acquired along each acquisition interval (in other words separately on each record of each sub-signal acquired over three minutes). In other words, as schematically indicated in figure 2 by the arrow that goes from the output of operation 5 to the input of operation 4, once the calculation of the frequency spectrum and of the relative index for the current acquisition interval is terminated, in addition to updating the time trend of the index (for the operation 6), the same operations are performed on the signal record of the subsequent acquisition interval.

Preferably the method 99 comprises, separately for each of the accelerometric sub-signals, calculating a frequency spectrum 4. Exemplarily each of the frequency spectra comprises a fundamental harmonic having frequency equal to the fundamental frequency (preferably obtained from the speed signal).

Exemplarily the method 99 first comprises calculating a variance 10 of each of the accelerometric sub-signals and accepting each of the accelerometric sub-signals if the variance is less than a given percentage value.

Exemplarily the method 99 subsequently comprises filtering 11 each of the accelerometric sub-signals with a fourth-order Butterworth filter.

Exemplarily it is provided interpolating 12 each of the accelerometric sub-signals with a spline and, exemplarily, sampling 13 in synchronous way with the rotation each of the interpolated accelerometric sub-signals. Exemplarily, the sampling 13 in synchronous way is performed, for example, with three-hundred points for each rotation period, so that the first and last of the sampled points always fall at the starting instant and the ending instant of the rotation period (obtained for example from the speed signal).

Exemplarily calculating each frequency spectrum 4 comprises, subsequently to the sampling 13 in synchronous way, calculating a fast Fourier transform (FFT) 14, on each of the records of re-sampled accelerometric sub-signal. Exemplarily each of the records of accelerometric sub-signal is partitioned into a predetermined number of (e.g. thirty) portions and the fast Fourier transform 14 is calculated on each portion. Exemplarily, each portion corresponds to fifty consecutive rotation periods.

Exemplarily calculating each frequency spectrum 4 comprises, separately for each sub-signal (and for each acquisition interval), averaging in terms of complex numbers 15 the fast Fourier transforms calculated on the predetermined number of portions of each accelerometric sub-signal. The result of this averaging in terms of complex numbers is an averaged frequency spectrum, characterized by amplitude values distributed in frequency.

Exemplarily in each of the averaged frequency spectra 16 a set of M amplitudes associated with M multiple integer harmonics of the consecutive fundamental harmonic starting from, and including, the fundamental harmonic is determined (and typically stored in the processing unit). In other words, exemplarily only the amplitudes of the first M multiple integer harmonics of the fundamental harmonic are determined and used for the calculation of the index. For example, M is equal to thirty. Exemplarily each amplitude is calculated integrating the amplitudes of the harmonics which fall into a neighbourhood around 10% of the value of the fundamental frequency and centred in the value of the respective nominal frequency of the respective integer multiple harmonic of the fundamental harmonic.

In other words, for each acquisition interval and for each sub-signal, the result of the calculation of the frequency spectrum can exemplarily consist of an M-tuple of real values which represent the amplitude of the first M (e.g. thirty) integer multiple harmonics of the fundamental harmonic.

Exemplarily the method 99 comprises calculating a reference spectrum 17 of each accelerometric sub-signal at a reference condition. For example, this reference condition provides the achievement of a structural and/or dimensional stability of the tyre during the test, while still remaining in a state of integrity. For example, this reference condition can be temporally predetermined, for example it can correspond to the reference time interval that goes from the beginning to the end of the tenth hour starting from the beginning of the rotation of the tyre 70.

Exemplarily the reference spectrum is obtained by averaging the frequency spectra (for example by averaging the M-tuples of amplitudes of the respective first M harmonics) calculated along six consecutive acquisition intervals, for example the acquisition intervals comprised between the ninth and tenth hour from the beginning of the rotation.

**In** other words, the reference spectrum can exemplarily consist of an M-tuple of real values that represent the average value of the amplitudes of the first M harmonics of the frequency spectrum calculated for each acquisition interval exemplarily contained from the beginning to the end of the tenth hour from the start of the rolling test.

Preferably method 99 comprises, for each acquisition interval, separately calculating an index 5 as a function of the frequency spectrum, comparing 18 the frequency spectrum with the reference spectrum.

Said comparing 18 comprises, for each acquisition interval:

- selecting a subset of P harmonics of the set of M harmonics (with P for example equal to twelve), said P harmonics having the greatest amplitude between the M harmonics;
- preferably selecting in the frequency spectrum of the current acquisition interval a number P' of possible further harmonics corresponding to the harmonics belonging to the respective sub-sets of P harmonics in the respective frequency spectra of the acquisition intervals prior to the current acquisition interval and not belonging to the sub-set of P harmonics in the current frequency spectrum (P' is an integer greater than or equal to zero and less than or equal to M-P);
- comparing the P amplitudes of the P harmonics and the P' amplitudes of the P' possible further harmonics with the amplitudes of the corresponding harmonics in the reference spectrum.

In other words, for the acquisition interval immediately subsequent to the calculation of the reference spectrum, only the P harmonics with greater amplitude are used. For each subsequent acquisition interval, in addition to the aforesaid P harmonics with greatest amplitude in the frequency spectrum of the current acquisition interval, also the P' possible further harmonics that were present between the P harmonics with greater amplitude in the acquisition intervals prior to the current acquisition interval and which are not present between the P harmonics in the current acquisition interval are used.

Exemplarily for each acquisition interval, the index (IDP) is calculated by the formula

$$IDP = \frac{1}{N} \sum_{i=1}^{N} \left( \frac{A_i}{A_{i_{rif}}} - 1 \right)^2$$

wherein N is equal to the sum of the number P of the harmonics, for the current frequency spectrum, belonging to the sub-set and of the number P' of possible further harmonics (therefore N is greater than or equal to P and less than or equal to M);

$A_i$ is the amplitude of the i-th harmonic of the P harmonics and also of the P' possible further harmonics of the current frequency spectrum;

$A_{i_{rif}}$ is the amplitude of the i-th harmonic of the reference spectrum corresponding to the i-th harmonic of the current frequency spectrum.

Preferably the time trend of the index is obtained calculating the index separately for each acquisition interval.

Exemplarily the time trend of the index is obtained grouping 19 the acquisition intervals in a time series of groups of acquisition intervals consecutive to each other, exemplarily in number equal to six, and, for each group, performing 20 an average of the respective indexes calculated for each acquisition interval of the group.

In other words, for each current acquisition interval, it is performed from time to time the average of the current index with the indexes calculated for exemplarily the five previous acquisition intervals (i.e. an average of the indexes is performed on a mobile window of, e.g., an hour).

Exemplarily the method 99 comprises evaluating 6 in real time a state of integrity of the tyre 70 on the basis of the time trend of one or more of the three respective indexes (IDP$_X$, IDP$_Y$, IDP$_Z$).

In one embodiment, evaluating 6 the state of integrity of the tyre 70 is performed offline, based on a report generated as a function of the time trend of each index automatically by the processing unit at the end of the rolling test of the tyre.

Exemplarily it is provided evaluating 6 the state of integrity of the tyre 70 considering separately the time trend of each respective index.

In one embodiment, the state of integrity of the tyre is evaluated on the basis of a time trend of a combination of the respective indexes, for example of a linear sum of the three respective indexes.

Exemplarily it is provided establishing that the tyre 70 is damaged when the time trend of one or more of the three respective indexes verifies a respective damage condition which for example verifies when a value of the respective index is greater than or equal to a respective threshold value, wherein each respective threshold value can be, for example, different from the others.

In one further embodiment, the damage condition is verified when the value of one or more indexes changes rapidly over time, regardless of the achievement of the respective threshold value.

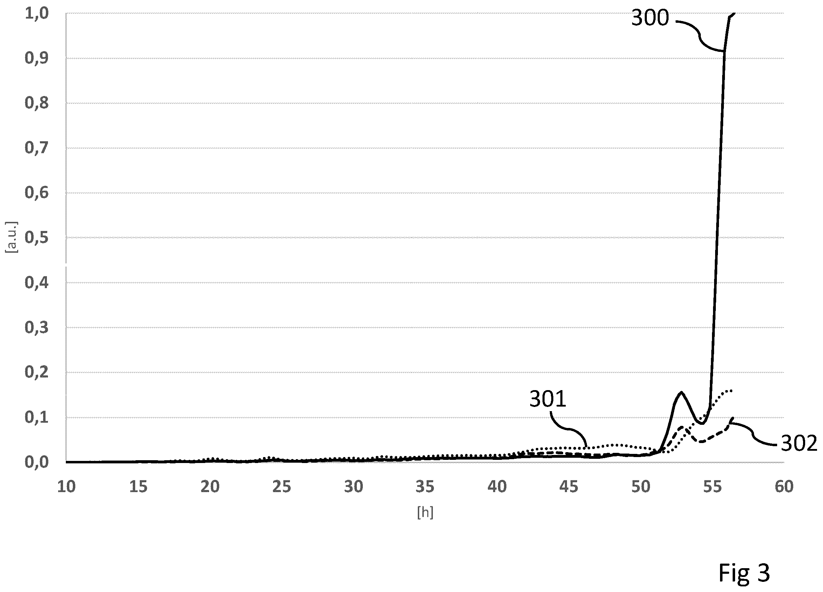

Figures 3, 4 and 5 show in graphic form the results of three exemplary rolling tests conducted by the Applicant according to the method described above.

In particular, the figures show examples of the time trend of the three indexes (IDP$_X$, IDP$_Y$, IDP$_Z$), calculated starting from the accelerometric sub-signals acquired for the three components of the linear acceleration, respectively at three different damages generated in one tyre. In particular, the continuous line 300 shows the time trend of the IDP$_X$ index associated with the tangential component of the linear acceleration, the dot line 301 shows the time trend of the IDP$_Y$ index associated with the axial component of the linear acceleration and the dashed line 302 shows the time trend of the IDPz index associated with the radial component of the linear acceleration.

Each datum that composes the lines 300, 301 and 302 corresponds to the value of the respective index in a respective acquisition interval of three minutes as explained above.

In the graphs shown in figures 3, 4 and 5, the values on the horizontal axis represent the temporal instant (expressed in hours) starting from the instant subsequent to the reference condition (e.g. instant subsequent to the tenth hour) until the end of the test (i.e. achievement of the respective threshold value by one of the three indexes).

The values on the vertical axis represent the values of the indexes expressed in arbitrary units, wherein the unit value represents the threshold value of the index which has reached its respective threshold value in the test. The indexes are averaged on a one-hour mobile window as described above.

Figure 3 shows the time trend of the three indexes in the event of a damage to the tyre belt. As visible in the graph, the time trend of the index 300, associated to the tangential component of the acceleration, has reached the threshold value, thus verifying the damage condition, at approximately hour fifty-seven from the beginning of the rotation.

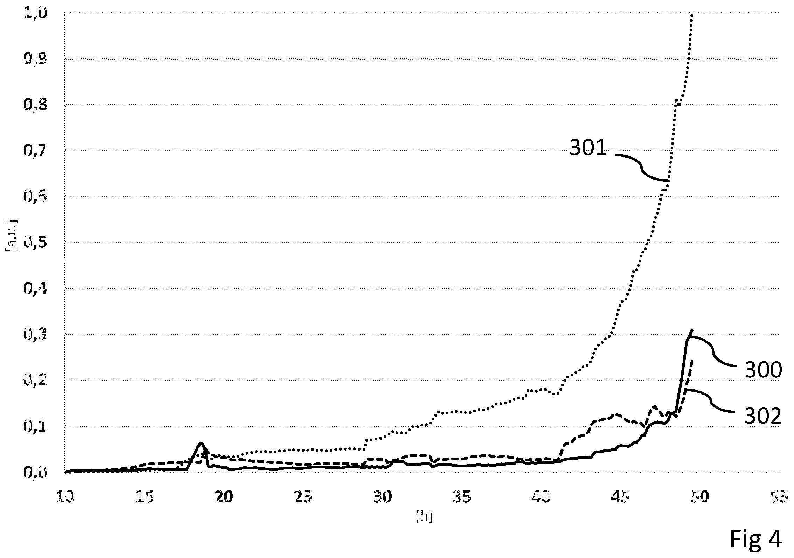

Figure 4 shows the time trend of the three indexes in the event of a damage to the sidewall of the tyre. As visible in the graph, the time trend of the index 301, associated to the axial component of the acceleration, has reached the threshold value, thus verifying the damage condition, at approximately hour forty-eight from the beginning of the rotation.

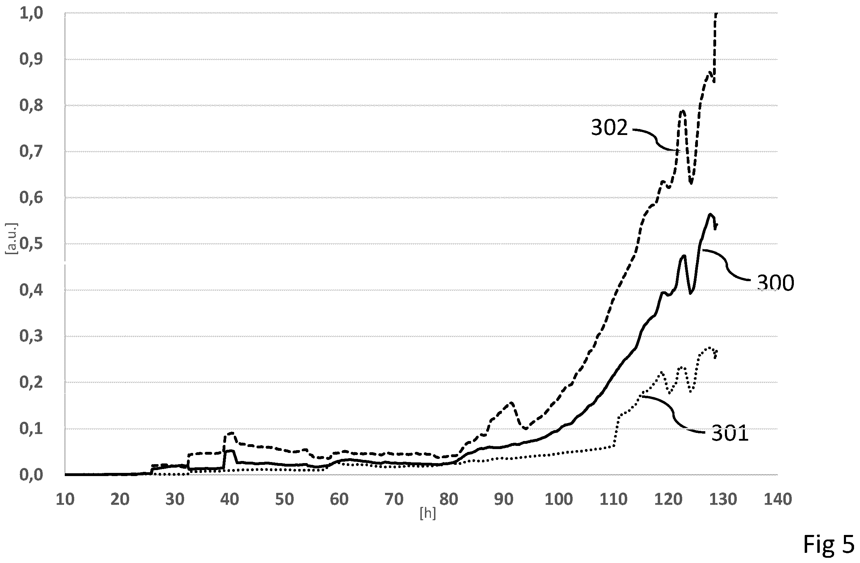

Figure 5 shows the time trend of the three indexes in the event of a fracture to the tyre belt. As visible in the graph, the time trend of the index 302, associated to the radial component of the acceleration, has reached the threshold value, thus verifying the damage condition, at approximately hour one-hundred-twenty-nine from the beginning of the rotation.

Exemplarily it is provided monitoring in real time the time trend of the indexes and generating an alarm signal 21 when at least one damage condition verifies, in order to interrupt the test and/or temporarily stop the rotation for a visual inspection.

## Claims

1. Method (99) of testing a tyre (70), the method (99) comprising:

   - mounting (1) said tyre (70) on a rim and inflating (30) the tyre (70) to a pressure;
   - putting in rotation (2) the tyre (70) around an axis of rotation (101), with said tyre (70) in thrust with a force on a rolling surface (74);
   - acquiring (3), on a time series of acquisition intervals, an accelerometric signal representative of a linear acceleration undergone by said tyre (70) during said rotation;
   - calculating at least one frequency spectrum (4) of said accelerometric signal, wherein calculating said at least one frequency spectrum (4) comprises:

      - determining (16) a set of M harmonics, said M harmonics being consecutive integer multiples of a fundamental harmonic, starting from, and including, said fundamental harmonic, and
      - determining M amplitudes of said M harmonics;

   - calculating at least one index (5) as a function of said at least one frequency spectrum, wherein calculating said at least one index (5) comprises:

      - calculating a reference spectrum (17) of the accelerometric signal at a reference condition, and
      - comparing (18), for each of said acquisition intervals, said at least one frequency spectrum and said reference spectrum; and

   - evaluating (6) a state of integrity of said tyre (70) on the basis of a time trend of said at least one index,
   wherein M is an integer greater than or equal to twenty and/or less than or equal to fifty,
   and wherein said comparing (18) comprises, for each acquisition interval, ordering said M harmonics of said set of M harmonics in decreasing order of amplitude, selecting a subset of said ordered set of M harmonics comprising a number P of consecutive harmonics starting from the first, wherein P is greater than or equal to six and/or less than or equal to thirty, and comparing P amplitudes of said P harmonics of said sub-set with respective amplitudes of corresponding harmonics in said reference spectrum.

2. Method (99) according to claim 1, wherein said rotation is **characterized by** a rotation speed which defines a fundamental frequency, wherein said rotation is **characterized by** a rotation period, wherein said at least one frequency spectrum comprises a fundamental harmonic having frequency equal to said fundamental frequency, wherein each acquisition interval comprises a plurality of rotation periods, wherein each of said acquisition intervals has a duration, preferably continuous, greater than or equal to 1 minute and/or less than or equal to 5 minutes, wherein said acquisition intervals have a same duration, wherein a time interval between a respective initial instant of two subsequent acquisition intervals is constant, preferably it is greater than or equal to 5 minutes and/or less than or equal to 15 minutes, wherein it is provided acquiring a speed signal (31) representative of said rotation speed of said tyre, wherein said speed signal is acquired on said time series of acquisition intervals, and wherein said speed signal and/or said accelerometric signal is/are acquired with an acquisition frequency greater than or equal to 4000 Hz and/or less than or equal to 7000 Hz.

3. Method (99) according to claim 1 or 2, wherein it is provided determining said time trend of the at least one index performing said calculating at least one frequency spectrum (4) and said calculating at least one index (5), for each of said acquisition intervals.

4. Method (99) according to any one of the previous claims, wherein calculating said at least one frequency spectrum (4) comprises calculating a variance (10) of said accelerometric signal and accepting said accelerometric signal as a function of said variance, wherein calculating said at least one frequency spectrum (4) comprises filtering (11) said accelerometric signal with a low-pass filter, wherein calculating said at least one frequency spectrum (4) comprises interpolating (12) said accelerometric signal and, for each period of said rotation, sampling (13) said interpolated accelerometric signal in a given number of points, wherein said sampling is performed in synchronous way with said rotation, wherein said calculating said at least one frequency spectrum (4) comprises calculating a Fourier transform (14) on said accelerometric signal, wherein said Fourier transform is calculated on a plurality of portions of said accelerometric signal each portion corresponding to an integer of consecutive rotation periods, and wherein said calculating said at least one frequency spectrum (4) comprises averaging in terms of complex numbers (15) said Fourier transforms calculated on said plurality of portions of accelerometric signal.

5. Method (99) according to any one of the previous claims, wherein said reference condition corresponds to a state of integrity of said tyre (70), wherein said reference condition is temporally predetermined, and wherein said reference condition corresponds to a reference interval which falls after a fifth hour and/or before a fifteenth hour from the beginning of the rotation of said tyre (70) in thrust on said rolling surface (74).

6. Method (99) according to any one of the previous claims, wherein calculating said reference spectrum (17) comprises averaging a series of frequency spectra separately calculated for each acquisition interval of a series of consecutive acquisition intervals in said reference condition.

7. Method (99) according to claim 4, wherein it is provided determining said M amplitudes of said M harmonics in an averaged frequency spectrum obtained through said averaging in terms of complex numbers (15) said Fourier transforms calculated on said plurality of portions of accelerometric signal, wherein said M amplitudes are determined by integrating amplitudes of harmonics which fall into a neighbourhood of a respective nominal frequency of the respective harmonic integer multiple of the fundamental harmonic.

8. Method (99) according to any one of the previous claims, wherein said comparing (18) comprises selecting, in said at least one frequency spectrum of said each acquisition interval, a number P' of possible further harmonics of said at least one frequency spectrum corresponding to the harmonics belonging to the respective sub-sets of P harmonics in the frequency spectra of the acquisition intervals prior to said each acquisition interval and not belonging to said sub-set of P harmonics in said at least one frequency spectrum, wherein P' is greater than or equal to 0 and/or less than or equal to M-P, and

comparing P' amplitudes of said P' possible further harmonics with respective amplitudes of corresponding harmonics in said reference spectrum, wherein said comparing (18) is performed applying for each acquisition interval, the formula:

$$IDP = \frac{1}{N}\sum_{i=1}^{N}\left(\frac{A_i}{A_{i_{rif}}} - 1\right)^2,$$

wherein IDP is said at least one index for said acquisition interval;
N is a number greater than or equal to said number P of harmonics of said sub-set and less than or equal to said number M of harmonics of said set;
$A_i$ is the amplitude of an i-th harmonic of said P harmonics of said sub-set of harmonics and also of said P' possible further harmonics;
$A_{i_{rif}}$ is the amplitude of an i-th harmonic of said reference spectrum corresponding to said i-th harmonic.

9. Method (99) according to any one of the preceding claims, wherein it is provided obtaining said time trend of said at least one index by grouping (19) said acquisition intervals in a time series of groups of acquisition intervals consecutive to each other, wherein each group comprises a given number of acquisition intervals, and performing (20) for each group an average of the indexes separately calculated for each acquisition interval of the group.

10. Method (99) according to any one of the previous claims, wherein it is provided establishing that said tyre (70) is damaged provided that said time trend of the at least one index verifies a damage condition, wherein said damage condition is verified when a value of said at least one index becomes greater than or equal to a threshold value for said index, wherein said evaluating (6) said state of integrity of said tyre (70) on the basis of the time trend of the at least one index is performed in real time, wherein it is provided interrupting said rotation of the tyre (70) when said time trend of the at least one index verifies a damage condition, and wherein it is provided generating an alarm signal as a result of said establishing that said tyre is damaged.

11. Method (99) according to any one of the previous claims, wherein it is provided supplying a rotor (71) rotatably fixed to a stator (72) for being able to rotate around said axis of rotation (101), mounting said rim on an attachment portion (73) of said rotor (71), wherein said accelerometric signal is acquired on said stator (72), wherein it is provided supplying a rolling wheel (75) having a respective axis of rotation (102) parallel to said axis of rotation (101), wherein said rolling surface (74) belongs to said rolling wheel (75).

12. Method (99) according to any one of the previous claims, wherein said accelerometric signal comprises one or more of the following distinct accelerometric sub-signals: a first accelerometric sub-signal representative of a radial component of said linear acceleration, a second accelerometric sub-signal representative of an axial component of said linear acceleration and a third accelerometric sub-signal representative of a tangential component of said linear acceleration, and wherein calculating said at least one frequency spectrum (4) of said accelerometric signal comprises separately calculating a respective frequency spectrum for each of said accelerometric sub-signals, wherein calculating said at least one index as a function of said at least one frequency spectrum (5) comprises separately calculating a respective index as a function of each respective frequency spectrum, and wherein evaluating (6) the state of integrity of said tyre (70) on the basis of said time trend of said at least one index comprises evaluating the state of integrity of said tyre (70) on the basis of a time trend of one or more of said respective indexes.

13. Apparatus (200) of testing a tyre (70), the apparatus comprising:

    - a rotor (71) rotatably fixed to a stator (72) for being able to rotate around an axis of rotation (101), wherein the rotor (71) comprises an attachment portion (73) configured for mounting a rim on which it is mounted said tyre (70);
    - a rolling wheel (75) having a respective axis of rotation (102) parallel to said axis of rotation (101);
    - an acceleration sensor (76) configured for detecting a linear acceleration undergone by said rotor (71) in rotation and for generating an accelerometric signal representative of said linear acceleration;
    - a processing unit (77) in communication with said acceleration sensor (76) for acquiring said accelerometric signal on a time series of acquisition intervals, wherein the processing unit (77) is programmed and configured for, when said tyre (70) is in rotation and in thrust with a force on a rolling surface (74) of the rolling wheel (75):

        - calculating at least one frequency spectrum (4) of said accelerometric signal, wherein calculating said at least one frequency spectrum (4) comprises determining (16) a set of M harmonics, said M harmonics being consecutive integer multiples of a fundamental harmonic, starting from, and including, said fundamental harmonic, and determining M amplitudes of said M harmonics;
        - calculating at least one index (5) as a function of said at least one frequency spectrum, wherein calculating said at least one index (5) comprises calculating a reference spectrum (17) of the accelerometric signal at a reference condition, and comparing (18), for each of said acquisition intervals, said at least one frequency spectrum and said reference spectrum;

        - evaluating (6) a state of integrity of said tyre (70) on the basis of a time trend of said at least one index,
        wherein M is an integer greater than or equal to twenty and/or less than or equal to fifty, and wherein said comparing (18) comprises, for each acquisition interval, ordering said M harmonics of said set of M harmonics in decreasing order of amplitude, selecting a subset of said ordered set of M harmonics comprising a number P of consecutive harmonics starting from the first, wherein P is greater than or equal to six and/or less than or equal to thirty, and comparing P amplitudes of said P harmonics of said sub-set with respective amplitudes of corresponding harmonics in said reference spectrum.

14. Apparatus (200) according to claim 13, wherein said processing unit (77) is programmed and configured for performing one or more of the operations provided in the method (99) according to one or more of claims from 2 to 12.

15. Apparatus (200) according to claim 13 or 14, wherein said acceleration sensor (76) is configured for separately detecting one or more of an axial component, a radial component and a tangential component of said linear acceleration, wherein said acceleration sensor (76) is mounted on said stator (71), wherein the apparatus (200) comprises a speed sensor (78) configured for detecting a rotation speed of said tyre (70) and generating a speed signal representative of said rotation speed, wherein said speed sensor (78) is applied in part on said stator (72) and in part on said rotor (71), and wherein said processing unit (77) is in communication with said speed sensor (78) for acquiring said speed signal, wherein said apparatus (200) comprises a thrust device (80) for imparting on said rotor (71) a thrust force (F) directed towards said rolling wheel (75), wherein said force (F) is constant and chosen as a function of a load index of said tyre, wherein said apparatus (200) comprises a pressure sensor (79) for detecting a pressure of said tyre (70) and generating a pressure signal representative of said pressure, wherein said processing unit (77) is in communication with said pressure sensor (79) for acquiring said pressure signal, and for keeping constant said pressure.

## Patentansprüche

1. Verfahren (99) zum Prüfen eines Reifens (70), wobei das Verfahren (99) umfasst:

   - Montieren (1) des Reifens (70) auf eine Felge und Aufpumpen (30) des Reifens (70) auf einen Druck;
   - In-Rotation-Versetzen (2) des Reifens (70), mit dem Reifen (70) mit einer Kraft gegen eine Rolloberfläche (74) unter Schub, um eine Rotationsachse (101) herum;
   - Erfassen (3), über eine Zeitreihe von Erfassungsintervallen, eines Beschleunigungsmessungssignals, das für eine lineare Beschleunigung repräsentativ ist, der der Reifen (70) im Laufe der Rotation unterzogen wird;
   - Berechnen mindestens eines Frequenzspektrums (4) des Beschleunigungsmessungssignals, wobei das Berechnen des mindestens einen Frequenzspektrums (4) umfasst:

     - Bestimmen (16) eines Satzes von M Harmonischen, wobei die M Harmonischen konsekutive ganzzahlige Vielfache einer Grundharmonischen sind, beginnend mit und einschließlich der Grundharmonischen, und
     - Bestimmen von M Amplituden der M Harmonischen;
     - Berechnen mindestens eines Index (5) als eine Funktion des mindestens einen Frequenzspektrums, wobei das Berechnen des mindestens einen Index (5) umfasst:

       - Berechnen eines Referenzspektrums (17) des Beschleunigungsmessungssignals bei einer Referenzbedingung und
       - Vergleichen (18), für jedes der Erfassungsintervalle, des mindestens einen Frequenzspektrums und des Referenzspektrums; und
       - Bewerten (6) eines Integritätszustands des Reifens (70) auf der Grundlage eines zeitlichen Trends des mindestens einen Index,

     wobei M eine ganze Zahl größer als oder gleich zwanzig und/oder kleiner als oder gleich fünfzig ist und wobei das Vergleichen (18) für jedes Erfassungsintervall das Ordnen der M Harmonischen des Satzes von M Harmonischen in abnehmender Reihenfolge der Amplitude, das Auswählen eines Teilsatzes des geordneten Satzes von M Harmonischen, der eine Anzahl P von konsekutiven Harmonischen umfasst, beginnend mit der ersten, wobei P größer als oder gleich sechs und/oder kleiner als oder gleich dreißig ist, und das Vergleichen von P Amplituden der P Harmonischen des Teilsatzes mit jeweiligen Amplituden entsprechender Harmonischen in dem Referenzspektrum umfasst.

2. Verfahren (99) nach Anspruch 1, wobei die Rotation **gekennzeichnet ist durch** eine Rotationsgeschwindigkeit, die eine Grundfrequenz definiert, wobei die Rotation **gekennzeichnet ist durch** eine Rotationsperiode, wobei das mindestens eine Frequenzspektrum eine Grundharmonische umfasst, die eine Frequenz gleich der Grundfrequenz aufweist, wobei jedes Erfassungsintervall eine Vielzahl von Rotationsperioden umfasst, wobei jedes der Erfassungsintervalle eine Dauer, vorzugsweise kontinuierlich, größer als oder gleich 1 Minute und/oder kleiner als oder gleich 5 Minuten aufweist, wobei die Erfassungsintervalle eine gleiche Dauer aufweisen, wobei ein zeitliches Intervall zwischen einem jeweiligen Anfangszeitpunkt von zwei aufeinanderfolgenden Erfassungsintervallen konstant ist, wobei es vorzugsweise größer als oder gleich 5 Minuten und/oder kleiner als oder gleich 15 Minuten ist, wobei das Erfassen eines Geschwindigkeitssignals (31) bereitgestellt wird, das repräsentativ für die Rotationsgeschwindigkeit des Reifens ist, wobei das Geschwindigkeitssignal auf der Zeitreihe von Erfassungsintervallen erfasst wird, und wobei das Geschwindigkeitssignal und/oder das Beschleunigungsmessungssignal mit einer Erfassungsfrequenz größer als oder gleich 4000 Hz und/oder kleiner als oder gleich 7000 Hz erfasst wird/werden.

3. Verfahren (99) nach Anspruch 1 oder 2, wobei das Bestimmen des zeitlichen Trends des mindestens einen Index bereitgestellt wird, indem das Berechnen mindestens eines Frequenzspektrums (4) und das Berechnen mindestens eines Index (5) für jedes der Erfassungsintervalle durchgeführt wird.

4. Verfahren (99) nach einem der vorstehenden Ansprüche, wobei das Berechnen des mindestens einen Frequenzspektrums (4) das Berechnen einer Varianz (10) des Beschleunigungsmessungssignals und das Akzeptieren des Beschleunigungsmessungssignals als eine Funktion der Varianz umfasst, wobei das Berechnen des mindestens einen Frequenzspektrums (4) das Filtern (11) des Beschleunigungsmessungssignals mit einem Tiefpassfilter umfasst, wobei das Berechnen des mindestens einen Frequenzspektrums (4) das Interpolieren (12) des Beschleunigungsmesssignals und, für jede Periode der Rotation, das Abtasten (13) des interpolierten Beschleunigungsmesssignals in einer gegebenen Anzahl von Punkten umfasst, wobei das Abtasten auf synchrone Weise mit der Rotation durchgeführt wird, wobei das Berechnen des mindestens einen Frequenzspektrums (4) das Berechnen einer Fourier-Transformation (14) an dem Beschleunigungsmesssignal umfasst, wobei die Fourier-Transformation an einer Vielzahl von Anteilen des Beschleunigungsmesssignals berechnet wird, wobei jeder Anteil einer ganzen Zahl konsekutiver Rotationsperioden entspricht, und wobei das Berechnen des mindestens einen Frequenzspektrums (4) das Mitteln der an der Vielzahl von Anteilen des Beschleunigungsmesssignals berechneten Fourier-Transformationen in Form komplexer Zahlen (15) umfasst.

5. Verfahren (99) nach einem der vorstehenden Ansprüche, wobei die Referenzbedingung einem Zustand der Unversehrtheit des Reifens (70) entspricht, wobei die Referenzbedingung temporal vorbestimmt ist, und wobei die Referenzbedingung einem Referenzintervall entspricht, das nach einer fünften Stunde und/oder vor einer fünfzehnten Stunde ab dem Beginn der Rotation des Reifens (70) unter Schub auf der Rolloberfläche (74) liegt.

6. Verfahren (99) nach einem der vorstehenden Ansprüche, wobei das Berechnen des Referenzspektrums (17) das Mitteln einer Reihe von Frequenzspektren umfasst, die für jedes Erfassungsintervall einer Reihe von konsekutiven Erfassungsintervallen unter der Referenzbedingung separat berechnet werden.

7. Verfahren (99) nach Anspruch 4, wobei das Bestimmen der M Amplituden der M Harmonischen in einem gemittelten Frequenzspektrum bereitgestellt wird, das durch das Mitteln in Form komplexer Zahlen (15) der an der Vielzahl von Anteilen des Beschleunigungsmesssignals berechneten Fourier-Transformationen erhalten wird, wobei die M Amplituden durch Integrieren von Amplituden von Harmonischen bestimmt werden, die in einer Nachbarschaft einer jeweiligen Nominalfrequenz der jeweiligen harmonischen ganzzahligen Vielfachen der Grundharmonischen liegen.

8. Verfahren (99) nach einem der vorstehenden Ansprüche, wobei das Vergleichen (18) das Auswählen, in dem mindestens einen Frequenzspektrum von jedem Erfassungsintervall, einer Anzahl P' von möglichen weiteren Harmonischen des mindestens einen Frequenzspektrums entsprechend den Harmonischen, die zu den jeweiligen Teilsätzen von P Harmonischen in den Frequenzspektren der Erfassungsintervalle vor dem jeweiligen Erfassungsintervall gehören und nicht zu dem Teilsatz von P Harmonischen in dem mindestens einen Frequenzspektrum gehören, umfasst, wobei P' größer als oder gleich 0 und/oder kleiner als oder gleich M-P ist, und

Vergleichen von P' Amplituden von den P' möglichen weiteren Harmonischen mit jeweiligen Amplituden entsprechender Harmonischen in dem Referenzspektrum, wobei das Vergleichen (18) durchgeführt wird, indem für jedes Erfassungsintervall die folgende Formel angewendet wird:

$$IDP = \frac{1}{N}\sum_{i=1}^{N}\left(\frac{A_i}{A_{i_{rif}}} - 1\right)^2,$$

wobei IDP der mindestens eine Index für das Erfassungsintervall ist;
wobei N eine Anzahl größer als oder gleich der Anzahl P von Harmonischen des Teilsatzes und kleiner als oder gleich der Anzahl M von Harmonischen des genannten Satzes ist;
wobei $A_i$ die Amplitude einer i-ten Harmonischen der P Harmonischen des Teilsatzes von Harmonischen und auch von den P' möglichen weiteren Harmonischen ist;
$A_{i_{rif}}$ die Amplitude einer i-ten Harmonischen des Referenzspektrums ist, die der i-ten Harmonischen entspricht.

9. Verfahren (99) nach einem der vorstehenden Ansprüche, wobei das Erhalten des zeitlichen Trends des mindestens einen Index durch Gruppieren (19) der Erfassungsintervalle in einer Zeitreihe von einander konsekutiven Gruppen von Erfassungsintervallen, wobei jede Gruppe eine gegebene Anzahl von Erfassungsintervallen umfasst, und das Durchführen (20), für jede Gruppe, eines Durchschnitts der Indizes, die für jedes Erfassungsintervall der Gruppe separat berechnet wurden, bereitgestellt wird.

10. Verfahren (99) nach einem der vorstehenden Ansprüche, wobei das Etablieren, dass der Reifen (70) beschädigt ist, mit der Maßgabe, dass der zeitliche Trend des mindestens einen Index eine Schadensbedingung verifiziert, bereitgestellt wird, wobei die Schadensbedingung verifiziert ist, wenn ein Wert des mindestens einen Index größer als ein oder gleich einem Schwellenwert für den Index wird, wobei das Bewerten (6) des Integritätszustands des Reifens (70) auf der Grundlage des zeitlichen Trends des mindestens einen Index in Echtzeit durchgeführt wird, wobei ein Unterbrechen der Rotation des Reifens (70) bereitgestellt wird, wenn der zeitliche Trend des mindestens einen Index eine Schadensbedingung verifiziert, und wobei das Erzeugen eines Alarmsignals als ein Ergebnis des Etablierens, dass der Reifen beschädigt ist, bereitgestellt wird.

11. Verfahren (99) nach einem der vorstehenden Ansprüche, wobei das Liefern eines Rotors (71) bereitgestellt wird, der rotierbar an einem Stator (72) befestigt ist, um in der Lage zu sein, um die Rotationsachse (101) herum zu rotieren, wobei die Felge an einem Befestigungsanteil (73) des Rotors (71) montiert wird, wobei das Beschleunigungsmessungssignal an dem Stator (72) erfasst wird, wobei das Liefern eines Rollrads (75) mit einer jeweiligen Rotationsachse (102) parallel zu der Rotationsachse (101) bereitgestellt wird, wobei die Rolloberfläche (74) zu dem Rollrad (75) gehört.

12. Verfahren (99) nach einem der vorstehenden Ansprüche, wobei das Beschleunigungsmessungssignal ein oder mehrere der folgenden unterschiedlichen Beschleunigungsmessungsteilsignale umfasst: ein erstes Beschleunigungsmessungsteilsignal, das eine radiale Komponente der linearen Beschleunigung repräsentiert, ein zweites Beschleunigungsmessungsteilsignal, das eine axiale Komponente der linearen Beschleunigung repräsentiert, und ein drittes Beschleunigungsmessungsteilsignale, das eine tangentiale Komponente der linearen Beschleunigung repräsentiert, und wobei das Berechnen des mindestens einen Frequenzspektrums (4) des Beschleunigungsmessungssignals das separate Berechnen eines jeweiligen Frequenzspektrums für jedes der Beschleunigungsmessungsteilsignale umfasst, wobei das Berechnen des mindestens einen Index als eine Funktion des mindestens einen Frequenzspektrums (5) das separate Berechnen eines jeweiligen Index als eine Funktion jedes jeweiligen Frequenzspektrums umfasst, und wobei das Bewerten (6) des Integritätszustands des Reifens (70) auf der Grundlage des zeitlichen Trends des mindestens einen Index das Bewerten des Integritätszustands des Reifens (70) auf der Grundlage eines zeitlichen Trends eines oder mehrerer der jeweiligen Indizes umfasst.

13. Einrichtung (200) zum Prüfen eines Reifens (70), wobei die Einrichtung umfasst:

- einen Rotor (71), der rotierbar an einem Stator (72) befestigt ist, um in der Lage zu sein, um eine Rotationsachse (101) herum zu rotieren, wobei der Rotor (71) einen Befestigungsanteil (73) umfasst, der zum Montieren einer Felge konfiguriert ist, auf der der Reifen (70) montiert ist;
- ein Rollrad (75) mit einer jeweiligen Rotationsachse (102), die parallel zu der Rotationsachse (101) ist;
- einen Beschleunigungssensor (76), der zum Detektieren einer linearen Beschleunigung, die von dem sich drehenden Rotor (71) durchlaufen wird, und zum Erzeugen eines Beschleunigungsmessungssignals konfiguriert ist, das für die lineare Beschleunigung repräsentativ ist;
- eine Verarbeitungseinheit (77) in Verbindung mit dem Beschleunigungssensor (76) zum Erfassen des Beschleunigungsmessungssignals über eine Zeitreihe von Erfassungsintervallen,

wobei die Verarbeitungseinheit (77), wenn der Reifen (70) in Rotation und unter Schub mit einer Kraft auf einer Rolloberfläche (74) des Rollrads (75) vorliegt, programmiert und konfiguriert ist zu Folgendem:

- Berechnen mindestens eines Frequenzspektrums (4) des Beschleunigungsmessungssignals, wobei das Berechnen des mindestens einen Frequenzspektrums (4) das Bestimmen (16) eines Satzes von M Harmonischen, wobei die M Harmonischen konsekutive ganzzahlige Vielfache einer Grundharmonischen sind, beginnend ab und einschließlich der Grundharmonischen, und das Bestimmen von M Amplituden der M Harmonischen umfasst;
- Berechnen mindestens eines Index (5) als eine Funktion des mindestens einen Frequenzspektrums, wobei das Berechnen des mindestens einen Index (5) das Berechnen eines Referenzspektrums (17) des Beschleunigungsmessungssignals bei einer Referenzbedingung und das Vergleichen (18), für jedes der Erfassungsintervalle, des mindestens einen Frequenzspektrums und des Referenzspektrums umfasst;
- Bewerten (6) eines Integritätszustands des Reifens (70) auf der Grundlage eines zeitlichen Trends des mindestens einen Index, wobei M eine ganze Zahl größer als oder gleich zwanzig und/oder kleiner als oder gleich fünfzig ist und wobei das Vergleichen (18) für jedes Erfassungsintervall das Ordnen der M Harmonischen des Satzes von M Harmonischen in abnehmender Reihenfolge der Amplitude, das Auswählen eines Teilsatzes des geordneten Satzes von M Harmonischen, der eine Anzahl P von konsekutiven Harmonischen umfasst, beginnend mit der ersten, wobei P größer als oder gleich sechs und/oder kleiner als oder gleich dreißig ist, und das Vergleichen von P Amplituden der P Harmonischen des Teilsatzes mit jeweiligen Amplituden entsprechender Harmonischen in dem Referenzspektrum umfasst.

## EP 4 484 917 B1

**14.** Einrichtung (200) nach Anspruch 13, wobei die Verarbeitungseinheit (77) programmiert und konfiguriert ist zum Durchführen einer oder mehrerer der Operationen, die in dem Verfahren (99) nach einem oder mehreren der Ansprüche 2 bis 12 bereitgestellt sind.

**15.** Einrichtung (200) nach Anspruch 13 oder 14, wobei der Beschleunigungssensor (76) zum separaten Detektieren einer oder mehrerer einer axialen Komponente, einer radialen Komponente und einer tangentialen Komponente der linearen Beschleunigung konfiguriert ist, wobei der Beschleunigungssensor (76) an dem Stator (71) montiert ist, wobei die Einrichtung (200) einen Geschwindigkeitssensor (78) umfasst, der zum Detektieren einer Rotationsgeschwindigkeit des Reifens (70) und zum Erzeugen eines Geschwindigkeitssignals konfiguriert ist, das für die Rotationsgeschwindigkeit repräsentativ ist, wobei der Geschwindigkeitssensor (78) teilweise an dem Stator (72) und teilweise an dem Rotor (71) aufgebracht ist, und wobei die Verarbeitungseinheit (77) zum Erfassen des Geschwindigkeitssignals mit dem Geschwindigkeitssensor (78) in Verbindung vorliegt, wobei die Einrichtung (200) zum Übertragen einer Schubkraft (F), auf den Rotor (71), die auf das Rollrad (75) gerichtet ist, eine Schubvorrichtung (80) umfasst, wobei die Kraft (F) konstant ist und als eine Funktion eines Lastindex des Reifens gewählt wird, wobei die Einrichtung (200) zum Detektieren eines Drucks des Reifens (70) und Erzeugen eines Drucksignals, das für den Druck repräsentativ ist, einen Drucksensor (79) umfasst, wobei die Verarbeitungseinheit (77) mit dem Drucksensor (79) zum Erfassen des Drucksignals und zum Konstanthalten des Drucks in Verbindung vorliegt.

## Revendications

**1.** Procédé (99) d'essai d'un pneu (70), le procédé (99) comprenant :

- le montage (1) dudit pneu (70) sur une jante et le gonflage (30) du pneu (70) jusqu'à une pression ;
- la mise en rotation (2) du pneu (70) autour d'un axe de rotation (101), ledit pneu (70) étant en poussée avec une force sur une surface de roulement (74) ;
- l'acquisition (3), sur une série temporelle d'intervalles d'acquisition, d'un signal accélérométrique représentatif d'une accélération linéaire subie par ledit pneu (70) pendant ladite rotation ;
- le calcul d'au moins un spectre de fréquences (4) dudit signal accélérométrique, dans lequel le calcul dudit au moins un spectre de fréquences (4) comprend :

- la détermination (16) d'un ensemble de M harmoniques, lesdites M harmoniques étant des multiples entiers consécutifs d'une harmonique fondamentale, à compter de et comportant ladite harmonique fondamentale, et
- la détermination de M amplitudes desdites M harmoniques ;
- le calcul d'au moins un indice (5) en fonction dudit au moins un spectre de fréquences, dans lequel le calcul dudit au moins un indice (5) comprend :

- le calcul d'un spectre de référence (17) du signal accélérométrique dans une condition de référence, et
- la comparaison (18), pour chacun desdits intervalles d'acquisition, dudit au moins un spectre de fréquences et dudit spectre de référence ; et
- l'évaluation (6) d'un état d'intégrité dudit pneu (70) sur la base d'une tendance temporelle dudit au moins un indice,

dans lequel M est un nombre entier supérieur ou égal à vingt et/ou inférieur ou égal à cinquante, et dans lequel

ladite comparaison (18) comprend, pour chaque intervalle d'acquisition, le classement desdites M harmoniques dudit ensemble de M harmoniques par ordre décroissant d'amplitude, la sélection d'un sous-ensemble dudit ensemble classé de M harmoniques comprenant un nombre P d'harmoniques consécutives à compter de la première, dans lequel P est supérieur ou égal à six et/ou inférieur ou égal à trente, et la comparaison de P amplitudes desdites P harmoniques dudit sous-ensemble avec des amplitudes respectives d'harmoniques correspondantes dans ledit spectre de référence.

**2.** Procédé (99) selon la revendication 1, dans lequel ladite rotation est **caractérisée par** une vitesse de rotation qui définit une fréquence fondamentale, dans lequel ladite rotation est **caractérisée par** une période de rotation, dans lequel ledit au moins un spectre de fréquences comprend une harmonique fondamentale ayant une fréquence égale à ladite fréquence fondamentale, dans lequel chaque intervalle d'acquisition comprend une pluralité de périodes de rotation, dans lequel chacun desdits intervalles d'acquisition a une durée, de préférence continue, supérieure ou égale à 1 minute et/ou inférieure ou égale à 5 minutes, dans lequel lesdits intervalles d'acquisition ont une même durée, dans lequel un intervalle de temps entre un instant initial respectif de deux intervalles d'acquisition ultérieurs

**31**      **EP 4 484 917 B1**      **32**

est constant, de préférence il est supérieur ou égal à 5 minutes et/ou inférieur ou égal à 15 minutes, dans lequel il est prévu d'acquérir un signal de vitesse (31) représentatif de ladite vitesse de rotation dudit pneu, dans lequel ledit signal de vitesse est acquis sur ladite série temporelle d'intervalles d'acquisition, et dans lequel ledit signal de vitesse et/ou ledit signal accélérométrique est/sont acquis(s) avec une fréquence d'acquisition supérieure ou égale à 4 000 Hz et/ou inférieure ou égale à 7 000 Hz.

3. Procédé (99) selon la revendication 1 ou 2, dans lequel il est prévu de déterminer ladite tendance temporelle de l'au moins un indice en effectuant ledit calcul d'au moins un spectre de fréquences (4) et ledit calcul d'au moins un indice (5), pour chacun desdits intervalles d'acquisition.

4. Procédé (99) selon l'une quelconque des revendications précédentes, dans lequel le calcul dudit au moins un spectre de fréquences (4) comprend le calcul d'une variance (10) dudit signal accélérométrique et l'acceptation dudit signal accélérométrique comme fonction de ladite variance, dans lequel le calcul dudit au moins un spectre de fréquences (4) comprend le filtrage (11) dudit signal accélérométrique avec un filtre passe-bas, dans lequel le calcul dudit au moins un spectre de fréquences (4) comprend l'interpolation (12) dudit signal accélérométrique et, pour chaque période de ladite rotation, l'échantillonnage (13) dudit signal accélérométrique interpolé dans un nombre donné de points, dans lequel ledit échantillonnage est effectué de manière synchrone avec ladite rotation, dans lequel ledit calcul dudit au moins un spectre de fréquences (4) comprend le calcul d'une transformée de Fourier (14) sur ledit signal accélérométrique, dans lequel ladite transformée de Fourier est calculée sur une pluralité de parties dudit signal accélérométrique, chaque partie correspondant à un nombre entier de périodes de rotation consécutives, et dans lequel ledit calcul dudit au moins un spectre de fréquences (4) comprend le calcul de la moyenne, en termes de nombres complexes (15), desdites transformées de Fourier calculées sur ladite pluralité de parties de signal accélérométrique.

5. Procédé (99) selon l'une quelconque des revendications précédentes, dans lequel ladite condition de référence correspond à un état d'intégrité dudit pneu (70), dans lequel ladite condition de référence est temporellement prédéterminée, et dans lequel ladite condition de référence correspond à un intervalle de référence qui se situe après une cinquième heure et/ou avant une quinzième heure à compter du début de la rotation dudit pneu (70) en poussée sur ladite surface de roulement (74).

6. Procédé (99) selon l'une quelconque des revendications précédentes, dans lequel le calcul dudit spectre de référence (17) comprend le calcul de la moyenne d'une série de spectres de fréquences calculés séparément pour chaque intervalle d'acquisition d'une série d'intervalles d'acquisition consécutifs dans ladite condition de référence.

7. Procédé (99) selon la revendication 4, dans lequel **il** est prévu de déterminer lesdites M amplitudes desdites M harmoniques dans un spectre de fréquences en moyenne obtenu par ledit calcul de la moyenne, en termes de nombres complexes (15), desdites transformées de Fourier calculées sur ladite pluralité de parties de signal accélérométrique, dans lequel lesdites M amplitudes sont déterminées en intégrant des amplitudes d'harmoniques qui se situent dans un voisinage d'une fréquence nominale respective du multiple entier d'harmonique respectif de l'harmonique fondamentale.

8. Procédé (99) selon l'une quelconque des revendications précédentes, dans lequel ladite comparaison (18) comprend la sélection, dans ledit au moins un spectre de fréquences de chaque intervalle d'acquisition, d'un nombre P' d'autres harmoniques possibles dudit au moins un spectre de fréquences correspondant aux harmoniques appartenant aux sous-ensembles respectifs de P harmoniques dans les spectres de fréquences des intervalles d'acquisition avant chaque intervalle d'acquisition et n'appartenant pas audit sous-ensemble de P harmoniques dans ledit au moins un spectre de fréquences, dans lequel P' est supérieur ou égal à 0 et/ou inférieur ou égal à M-P, et

la comparaison de P' amplitudes desdites P' autres harmoniques possibles avec des amplitudes respectives d'harmoniques correspondantes dans ledit spectre de référence, dans lequel ladite comparaison (18) est effectuée en appliquant, pour chaque intervalle d'acquisition, la formule :

$$IDP = \frac{1}{N}\sum_{i=1}^{N}\left(\frac{A_i}{A_{i_{rif}}} - 1\right)^2,$$

dans lequel IDP est ledit au moins un indice pour ledit intervalle d'acquisition ;
N est un nombre supérieur ou égal audit nombre P d'harmoniques dudit sous-ensemble et inférieur ou égal audit nombre M d'harmoniques dudit ensemble ;
$A_i$ est l'amplitude d'une i-ième harmonique desdites P harmoniques dudit sous-ensemble d'harmoniques, ainsi que desdites P' autres

harmoniques possibles ;

$A_{irif}$ est l'amplitude d'une i-ième harmonique dudit spectre de référence correspondant à ladite i-ième harmonique.

9. Procédé (99) selon l'une quelconque des revendications précédentes, dans lequel il est prévu d'obtenir ladite tendance temporelle dudit au moins un indice en regroupant (19) lesdits intervalles d'acquisition dans une série temporelle de groupes d'intervalles d'acquisition consécutifs les uns aux autres, dans lequel chaque groupe comprend un nombre donné d'intervalles d'acquisition, et en effectuant (20), pour chaque groupe, un calcul de la moyenne des indices calculés séparément pour chaque intervalle d'acquisition du groupe.

10. Procédé (99) selon l'une quelconque des revendications précédentes, dans lequel il est prévu d'établir que ledit pneu (70) est endommagé à condition que ladite tendance temporelle de l'au moins un indice vérifie une condition d'endommagement, dans lequel ladite condition d'endommagement est vérifiée lorsqu'une valeur dudit au moins un indice devient supérieure ou égale à une valeur seuil pour ledit indice, dans lequel ladite évaluation (6) dudit état d'intégrité dudit pneu (70) sur la base de la tendance temporelle de l'au moins un indice est effectuée en temps réel, dans lequel il est prévu d'interrompre ladite rotation du pneu (70) lorsque ladite tendance temporelle de l'au moins un indice vérifie une condition d'endommagement, et dans lequel il est prévu de générer un signal d'alarme à la suite dudit établissement du fait que ledit pneu est endommagé.

11. Procédé (99) selon l'une quelconque des revendications précédentes, dans lequel il est prévu de fournir un rotor (71) fixé de manière rotative à un stator (72) pour pouvoir tourner autour dudit axe de rotation (101), de monter ladite jante sur une partie d'attache (73) dudit rotor (71), dans lequel ledit signal accélérométrique est acquis sur ledit stator (72), dans lequel il est prévu de fournir une roue de roulement (75) ayant un axe de rotation (102) respectif parallèle audit axe de rotation (101), dans lequel ladite surface de roulement (74) appartient à ladite roue de roulement (75).

12. Procédé (99) selon l'une quelconque des revendications précédentes, dans lequel ledit signal accélérométrique comprend l'un ou plusieurs des sous-signaux accélérométriques distincts suivants : un premier sous-signal accélérométrique représentatif d'une composante radiale de ladite accélération linéaire, un deuxième sous-signal accélérométrique représentatif d'une composante axiale de ladite accélération linéaire et un troisième sous-signal accélérométrique représentatif d'une composante tangentielle de ladite accélération linéaire, et dans lequel le calcul dudit au moins un spectre de fréquences (4) dudit signal accélérométrique comprend le calcul séparé d'un spectre de fréquences respectif pour chacun desdits sous-signaux accélérométriques, dans lequel le calcul dudit au moins un indice en fonction dudit au moins un spectre de fréquences (5) comprend le calcul séparé d'un indice respectif en fonction de chaque spectre de fréquences respectif, et dans lequel l'évaluation (6) de l'état d'intégrité dudit pneu (70) sur la base de ladite tendance temporelle dudit au moins un indice comprend l'évaluation de l'état d'intégrité dudit pneu (70) sur la base d'une tendance temporelle d'un ou de plusieurs desdits indices respectifs.

13. Appareil (200) d'essai d'un pneu (70), l'appareil comprenant :

- un rotor (71) fixé de manière rotative à un stator (72) pour pouvoir tourner autour d'un axe de rotation (101), dans lequel le rotor (71) comprend une partie d'attache (73) configurée pour monter une jante sur laquelle il est monté ledit pneu (70) ;
- une roue de roulement (75) ayant un axe de rotation (102) respectif parallèle audit axe de rotation (101) ;
- un capteur d'accélération (76) configuré pour détecter une accélération linéaire subie par ledit rotor (71) en rotation et pour générer un signal accélérométrique représentatif de ladite accélération linéaire ;
- une unité de traitement (77) en communication avec ledit capteur d'accélération (76) pour acquérir ledit signal accélérométrique sur une série temporelle d'intervalles d'acquisition, dans lequel l'unité de traitement (77) est programmée et configurée pour, lorsque ledit pneu (70) est en rotation et en poussée avec une force sur une surface de roulement (74) de la roue de roulement (75) :

- calculer au moins un spectre de fréquences (4) dudit signal accélérométrique, dans lequel le calcul dudit au moins un spectre de fréquences (4) comprend la détermination (16) d'un ensemble de M harmoniques, lesdites M harmoniques étant des multiples entiers consécutifs d'une harmonique fondamentale, à compter de, et comportant, ladite harmonique fondamentale, et la détermination des M amplitudes desdites M harmoniques ;
- calculer au moins un indice (5) en fonction dudit au moins un spectre de fréquences, dans lequel le calcul dudit au moins un indice (5) comprend le calcul d'un spectre de référence (17) du signal accélérométrique dans une condition de référence, et la comparaison (18), pour chacun desdits intervalles d'acquisition, dudit au moins un spectre de fréquences et dudit spectre de référence ;
- évaluer (6) un état d'intégrité dudit pneu (70) sur la base d'une tendance temporelle dudit au moins un indice,

dans lequel M est un nombre entier supérieur ou égal à vingt et/ou inférieur ou égal à cinquante, et dans lequel

ladite comparaison (18) comprend, pour chaque intervalle d'acquisition, le classement desdites M harmoniques dudit ensemble de M harmoniques par ordre décroissant d'amplitude, la sélection d'un sous-ensemble dudit ensemble classé de M harmoniques comprenant un nombre P d'harmoniques consécutives à compter de la première, dans lequel P est supérieur ou égal à six et/ou inférieur ou égal à trente, et la comparaison de P amplitudes desdites P harmoniques dudit sous-ensemble avec des amplitudes respectives d'harmoniques correspondantes dans ledit spectre de référence.

14. Appareil (200) selon la revendication 13, dans lequel ladite unité de traitement (77) est programmée et configurée pour mettre en œuvre l'une ou plusieurs des opérations fournies dans le procédé (99) selon l'une ou plusieurs des revendications 2 à 12.

15. Appareil (200) selon la revendication 13 ou 14, dans lequel ledit capteur d'accélération (76) est configuré pour détecter séparément l'une ou plusieurs parmi une composante axiale, une composante radiale et une composante tangentielle de ladite accélération linéaire, dans lequel ledit capteur d'accélération (76) est monté sur ledit stator (71), dans lequel l'appareil (200) comprend un capteur de vitesse (78) configuré pour détecter une vitesse de rotation dudit pneu (70) et générer un signal de vitesse représentatif de ladite rotation vitesse, dans lequel ledit capteur de vitesse (78) est appliqué en partie sur ledit stator (72) et en partie sur ledit rotor (71), et dans lequel ladite unité de traitement (77) est en communication avec ledit capteur de vitesse (78) pour acquérir ledit signal de vitesse, dans lequel ledit appareil (200) comprend un dispositif de poussée (80) destiné à exercer sur ledit rotor (71) une force de poussée (F) dirigée vers ladite roue de roulement (75), dans lequel ladite force (F) est constante et choisie en fonction d'un indice de charge dudit pneu, dans lequel ledit appareil (200) comprend un capteur de pression (79) destiné à détecter une pression dudit pneu (70) et à générer un signal de pression représentatif de ladite pression, dans lequel ladite unité de traitement (77) est en communication avec ledit capteur de pression (79) pour acquérir ledit signal de pression, et pour maintenir ladite pression constante.

EP 4 484 917 B1

Fig 1

Fig 2

EP 4 484 917 B1

Fig 3

EP 4 484 917 B1

Fig 4

Fig 5

EP 4 484 917 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006265154 A1
- WO 0204906 A1
- US 6606569 B1